# FASCICULE DE BREVET EUROPEEN

(11) **EP 3 335 801 B1**
(45) Date de publication et mention de la délivrance du brevet: **21.10.2020**
(21) Numéro de dépôt: 17207220.9
(22) Date de dépôt: 14.12.2017
(51) Int. Cl.: B05B 1/16, B05B 13/04, B05B 7/08, B05B 12/04, B05B 12/12, B05B 12/14, B05B 12/18, B05B 12/22, B05B 5/08, B25J 15/04, B05B 15/55, B05B 1/08, B05B 1/12, B05C 5/02, B05B 12/00

(54) **TÊTE D'APPLICATION D'UN PRODUIT DE REVÊTEMENT SUR UNE SURFACE À REVÊTIR ET SYSTÈME D'APPLICATION COMPRENANT CETTE TÊTE D'APPLICATION**
KOPF ZUM AUTRAGEN EINES BESCHICHTUNGSPRODUKTS AUF EINE ZU BESCHICHTENDE OBERFLÄCHE, UND AUFTRAGSVORRICHTUNG, DIE EINEN SOLCHEN AUFTRAGSKOPF UMFASST
HEAD FOR APPLYING A COATING MATERIAL ON A SURFACE TO BE COATED AND APPLICATION SYSTEM INCLUDING THIS APPLICATION HEAD

(30) Priorité: 15.12.2016 FR 1662546
(43) Date de publication de la demande: 20.06.2018
(73) Titulaire: Exel Industries, 51200 Epernay (FR)
(72) Inventeur: MEDARD, Cyrille, 75009 Paris (FR); COLRAT, Michel, 75009 Paris (FR); PRUS, Eric, 75009 Paris (FR); CHOUAN, Nicolas, 75009 Paris (FR)
(74) Mandataire: Lavoix

(56) Documents cités:
- WO-A1-03/066239
- WO-A1-2004/085082
- DE-A1- 4 128 590
- DE-A1- 19 938 114
- DE-A1-102004 049 471
- DE-A1-102010 019 612
- DE-A1-102012 005 650
- JP-A- S6 422 372
- US-A- 4 923 743
- US-A1- 2007 128 343
- US-A1- 2009 020 621
- US-A1- 2010 065 292
- GHASEM G NASR ANDREW J YULE LOTHAR BENDIG: 1 janvier 2002 (2002-01-01), INDUSTRIAL SPRAYS AND ATOMIZATION,, PAGE(S) 7 - 33, XP009195118, * pages 20, 25 *

## Description

La présente invention concerne une tête d'application d'un produit de revêtement sur une surface à revêtir. L'invention concerne également un système d'application d'un produit de revêtement sur une surface à revêtir comprenant cette tête d'application.

Dans le domaine de la peinture industrielle, on connaît des systèmes d'application pour déposer un produit de revêtement, tel qu'une peinture, sur une surface à revêtir, par exemple sur une pièce mécanique.

Il est par exemple connu de projeter de la peinture pulvérisée en un jet de gouttelettes sous la forme d'un large jet d'aérosol, ou aérosol, au moyen d'un pulvérisateur à bol rotatif ou encore d'un pistolet pneumatique. Ces techniques permettent de revêtir des surfaces de superficie importante et avec une vitesse d'application élevée, de façon à être compatible avec les cadences de production dans des lignes de fabrication industrielle, par exemple dans l'industrie automobile.

Ces techniques connues ne donnent cependant pas entière satisfaction pour certaines applications, dans lesquelles une bonne précision d'application de la peinture est recherchée. En particulier, il est nécessaire que la peinture soit appliquée au bon endroit de la surface à revêtir.

Notamment, ces technologies ne permettent pas d'avoir une bonne maîtrise de l'emplacement sur lequel les gouttelettes de peinture se déposent. L'application du produit de revêtement sur une zone cible de la surface à revêtir s'accompagne d'un débordement non souhaité en dehors de cette zone cible, dit « overspray » en langue anglaise. On estime que le taux de transfert, ou rendement de dépôt, obtenu au moyen de ces techniques, défini comme étant le rapport entre la quantité de peinture qui se dépose sur la zone cible et la quantité de peinture pulvérisée, est au maximum de 80%. Cela signifie que jusqu'à 20% de la peinture est déposée hors des zones où on souhaite en déposer.

Le document US2009/0020621 A1 décrit un dispositif de pulvérisation de peinture au moyen d'une bombe aérosol.

C'est à ces inconvénients qu'entend plus particulièrement remédier l'invention en proposant une tête d'application d'un produit de revêtement sur une surface à revêtir, permettant d'appliquer le produit avec une précision d'application supérieure aux technologies existantes, une qualité d'application élevée et avec un rendement de dépôt élevé, tout en projetant le produit de revêtement sur une surface importante.

A cet effet, l'invention concerne une tête d'application d'un produit de revêtement sur une surface à revêtir, cette tête d'application comportant au moins deux buses de pulvérisation du produit de revêtement, chacune adaptée pour projeter le produit de revêtement sous la forme d'un jet d'aérosol, en créant simultanément plusieurs gouttelettes dont le diamètre est inférieur au diamètre de l'orifice de sortie de la buse de pulvérisation, cette tête d'application comportant en outre une ou plusieurs buses de projection additionnelles, distinctes des buses de pulvérisation, les buses de projection additionnelles étant adaptées pour générer un jet goutte à goutte de produit de revêtement.

Grâce à l'invention, en combinant plusieurs buses de pulvérisation créant chacune un jet d'aérosol de produit de revêtement, la tête d'application est ainsi apte à déposer une bande de produit de revêtement sur la surface à revêtir qui soit suffisamment large. De plus, en créant plusieurs jets d'aérosol de petite taille plutôt qu'un unique jet d'aérosol de grande taille, la surface hors de la zone cible où se dépose accidentellement le produit de revêtement est elle aussi réduite. Comme les jets d'aérosol se combinent, les gouttelettes incontrôlées de chacun des jets se recombinent avec les gouttelettes du jet adjacent. Le rendement de l'application est donc fortement augmenté.

Selon des aspects avantageux mais non obligatoires de l'invention, une telle tête d'application peut incorporer une ou plusieurs des caractéristiques suivantes, prises isolément ou suivant toute combinaison techniquement admissible :
- les buses de pulvérisation sont espacées deux à deux d'une distance comprise entre 0,1cm et 2cm, de manière à ce que les jets d'aérosol soient en contact l'un avec l'autre au niveau de la surface à revêtir.
- les buses de pulvérisation sont agencées de manière à obtenir un recouvrement entre les jets d'aérosol produits par ces buses au niveau de la surface à revêtir, de préférence avec un taux de recouvrement entre les jets d'aérosol produits par deux buses de pulvérisation immédiatement voisines l'une de l'autre est supérieur ou égal à 5 %, ou sensiblement égal à 50 %, ou sensiblement égal à 66%.
- le diamètre de l'orifice de sortie de chaque buse de pulvérisation est supérieur ou égal à 100µm.
- les buses de pulvérisation sont agencées de manière à ce que les jets d'aérosol produits se recouvrent au moins partiellement deux à deux pour former un jet d'aérosol composite d'une largeur supérieure à 20mm au niveau de la surface à revêtir.
- les buses de projection additionnelles étant disposées sur au moins un bord latéral de la tête d'application et/ou de façon adjacente à des buses de pulvérisation.
- les buses de projection additionnelles présentent un diamètre d'orifice de sortie inférieur au diamètre de l'orifice de sortie des buses de pulvérisation.
- les buses de projection additionnelles sont alimentées par un circuit d'alimentation secondaire distinct du circuit d'alimentation des buses de pulvérisation, de manière à projeter un produit de revêtement additionnel distinct du produit de revêtement pulvérisé par les buses de pulvérisation.
- les buses de pulvérisation sont alignées entre elles le long de lignes et/ou de rangées.
- la tête d'application comporte un dispositif d'application d'un flux d'air de guidage du produit de revêtement pulvérisé, comprenant des orifices d'éjection d'air adaptés pour projeter un flux d'air de guidage adjacent à au moins une partie des jets d'aérosol.
- la tête d'application comporte un masque amovible ou rétractable, pour écrêter latéralement le jet d'aérosol émis par au moins une partie des buses de pulvérisation.
- la tête d'application comporte au moins une électrode adaptée pour appliquer un champ électrique sur les jets d'aérosol émis par les buses de pulvérisation, la surface à revêtir étant raccordée à une masse électrique du système.
- le masque est réalisé en matière électriquement conductrice et est adapté pour être connecté à un circuit de polarisation électrique pour polariser électriquement ce masque, le produit de revêtement étant préalablement polarisé électriquement avec une polarité opposée.

Selon un autre aspect, l'invention concerne un système d'application d'un produit de revêtement sur une surface à revêtir, comprenant un robot industriel multiaxes pourvu d'un bras articulé et une tête d'application du produit de revêtement fixée sur le bras articulé, la tête d'application étant selon l'invention.

Enfin, selon des aspects avantageux mais non obligatoires de l'invention, un tel système d'application peut incorporer une ou plusieurs des caractéristiques suivantes, prises isolément ou suivant toutes combinaisons techniquement admissibles :
- le système est adapté pour que la distance entre la tête d'application et la surface à revêtir soit inférieure à 200mm, de préférence comprise entre 5mm et 50mm, de préférence encore comprise entre 10mm et 30mm.
- la tête d'application est fixée au bras articulé de façon amovible au moyen d'un dispositif de fixation magnétique.

L'invention sera mieux comprise et d'autres avantages de celle-ci apparaitront plus clairement à la lumière de la description qui va suivre, d'un mode de réalisation d'une telle application et d'un système d'application donné uniquement à titre d'exemple et faite en référence aux dessins annexés dans lesquels :
- la figure 1 est une représentation schématique d'un système d'application d'un produit de revêtement sur une surface à revêtir, comportant une tête d'application ne faisant pas partie de l'invention ;
- la figure 2 est une vue en représentation simplifiée de la tête d'application de la figure 1, selon une coupe transversale orientée perpendiculairement à une direction de déplacement de la tête d'application ;
- la figure 3 est une représentation schématique d'une face inférieure de la tête d'application montrant la disposition de buses de pulvérisation du produit ;
- la figure 4 est une représentation schématique de la tête d'application de la figure 2 dans laquelle une des buses de pulvérisation est dans un état fermé ;
- la figure 5 est une représentation schématique face inférieure d'un mode de réalisation d'une tête d'application selon l'invention, montrant l'agencement de buses de pulvérisation et de buses de projection additionnelles ;
- la figure 6 est une représentation schématique, selon une vue en coupe transversale, de la tête d'application de la figure 5 ;
- la figure 7 est une représentation schématique, selon une vue latérale, d'un autre mode de réalisation d'une tête d'application selon l'invention, comportant un masque de guidage ;
- la figure 8 est une représentation schématique, selon une vue en coupe, d'un autre mode de réalisation d'une tête d'application selon l'invention, comportant un dispositif de guidage par air du produit de revêtement ;
- la figure 9 est une représentation schématique, d'un autre mode de réalisation d'une tête d'application selon l'invention, dans laquelle le système comporte un système de guidage électrostatique du produit de revêtement.

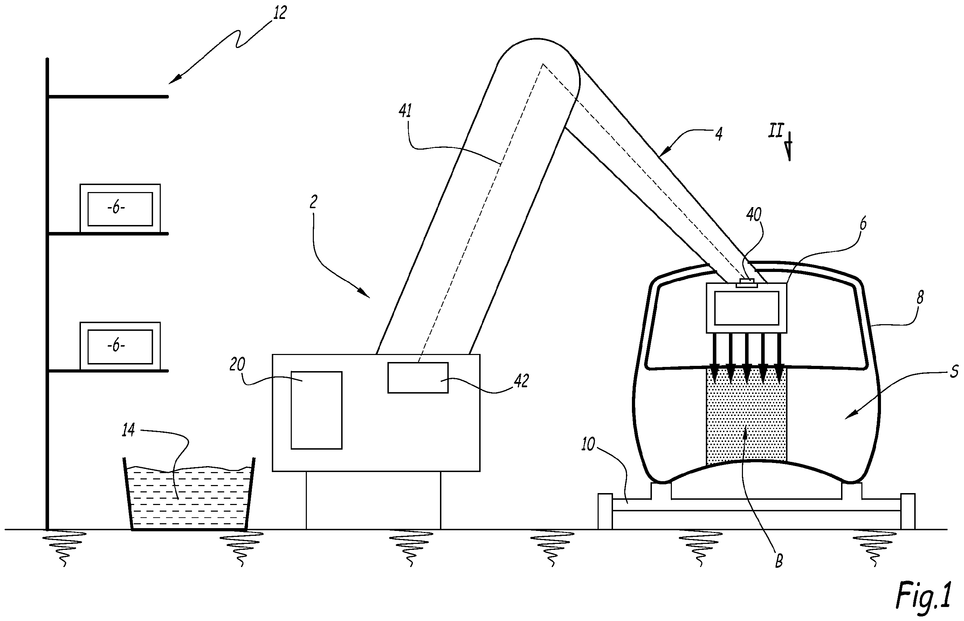

La figure 1 représente un système 1 d'application d'un produit de revêtement, par exemple sous forme liquide. Le système 1 comprend un robot industriel 2 multiaxe pourvu d'une unité de commande 20 électronique, d'un bras articulé 4 et une tête d'application 6 du produit de revêtement solidarisée à une extrémité du bras 4.

Le système 1 est destiné à appliquer, au moyen de la tête 6, un produit de revêtement sur une surface S à revêtir. Dans cet exemple, la surface S est une face extérieure d'une une pièce mécanique 8 montée sur un support 10. Par exemple, le support 10 est un tapis roulant.

Dans cette description, les pièces 8 sont des pièces d'automobile, par exemple des éléments métalliques de carrosserie. Le produit de revêtement est une peinture industrielle liquide, par exemple une couche de base, destinée à être appliquée sur les pièces 8.

En variante, le produit de revêtement peut être différent. A titre illustratif, il peut s'agir d'un vernis, d'une colle ou d'un mastic. De même, le système 1 peut être employé pour des applications autres que l'industrie automobile, par exemple pour l'industrie aéronautique ou pour revêtir des pièces en matière plastique.

Le système 1 est notamment configuré pour déplacer la tête d'application 6 par rapport à la surface S, au moyen du bras 4, et en suivant une trajectoire prédéfinie. Par exemple, le bras 4 est pourvu de moteurs, non illustrés, qui sont pilotés par l'unité de commande 20 en fonction d'un programme de déplacement.

Avantageusement, la tête d'application 6 est solidarisée de façon amovible au moyen d'un dispositif 40 de fixation magnétique commandable par l'unité de commande 20. Par exemple, le bras 4 est pourvu d'un électro-aimant commandable par l'unité de commande 20. La tête d'application 6 est, quant à elle, pourvue d'un aimant permanent destiné à coopérer avec l'électro-aimant porté par le bras 4.

Ainsi, la tête d'application 6 peut être remplacée sélectivement et automatiquement par le robot 2 lors d'opérations d'application du produit de revêtement. Par exemple, des têtes d'application de dimensions différentes sont utilisées successivement par le robot 2, en fonction de la forme de la pièce 8 et donc des dimensions de la surface S, pour appliquer le produit de revêtement sur une plus ou moins grande largeur.

A cet effet, le système 1 comporte optionnellement un magasin 12 de remisage de têtes d'application, ainsi qu'une boîte de rinçage 14 des têtes d'application 6. La boîte 14 permet de nettoyer les têtes d'application pour les débarrasser, par exemple au moyen d'une solution de nettoyage, du produit d'application qu'elles contiennent après avoir été utilisées.

Le système 1 comporte en outre un dispositif d'alimentation en produit de revêtement, adapté pour acheminer le produit de revêtement vers la tête d'application 6 avec une pression adéquate. Ce dispositif d'alimentation est ici schématiquement illustré par un conduit d'alimentation 41 qui est connecté, d'une part, à un réservoir de produit de revêtement et, d'autre part, à une ouverture 602 d'alimentation de la tête d'application 6.

Selon une variante, le produit de revêtement peut être obtenu à partir du mélange d'un premier composant et d'un deuxième composant fournis séparément au système 1. Dans ce cas, le système 1 comporte un mélangeur 42 connecté fluidiquement au système d'alimentation. Sur la figure 1, le mélangeur 42 est illustré connecté en amont du conduit d'alimentation 41. En variante, ce mélangeur 42 peut être incorporé à la tête d'application 6, au sein d'un circuit d'alimentation 600 de la tête d'application 6, décrit dans ce qui suit.

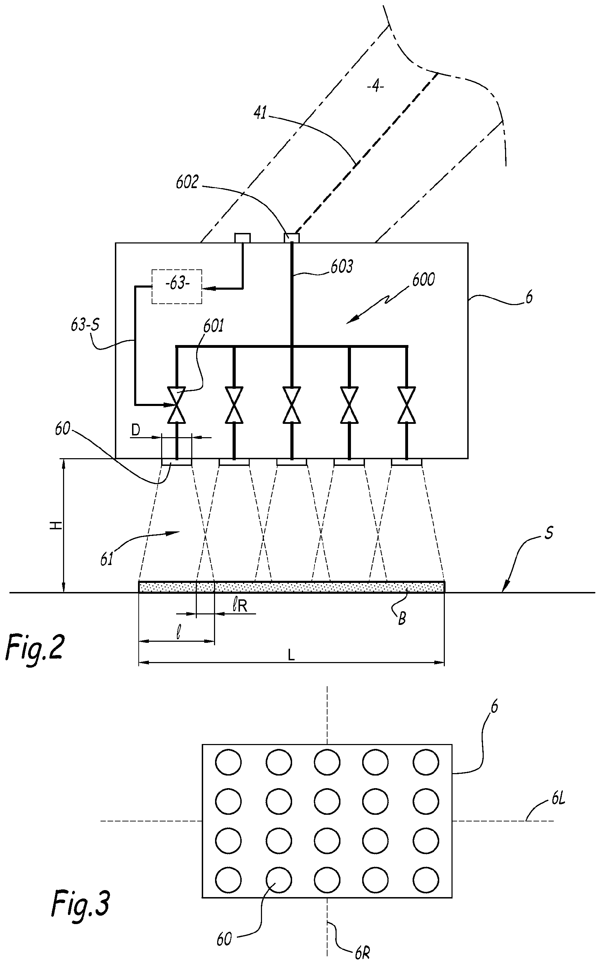

La tête d'application 6 est adaptée pour projeter, sur la surface S, le produit de revêtement en provenance du dispositif d'alimentation du système 1. Comme illustré à la figure 2, la tête d'application 6 comporte au moins deux buses de pulvérisation 60 du produit de revêtement. Chaque buse 60 est adaptée pour projeter le produit de revêtement sous la forme d'un jet d'aérosol 61.

Au sens de la présente description, un jet d'aérosol est un ensemble de gouttelettes de produit de revêtement en suspension dans l'air et projetées essentiellement sous forme d'un jet. Dans cet exemple, les gouttelettes formant le jet d'aérosol 61 sont projetées avec une vitesse essentiellement dirigée selon un axe, ou direction de propagation. Par exemple, l'axe de propagation est agencé perpendiculairement à la surface de la sortie de la buse 60, ici selon une direction verticale. En variante, cet axe de propagation est agencé avec un angle non nul par rapport à cette surface. La tête 6 est orientée de telle sorte que l'axe de propagation est perpendiculaire à la surface S à revêtir.

Au moins une partie des gouttelettes du jet d'aérosol 61 sont créées simultanément par la buse 60. Ainsi, le jet d'aérosol 61 diffère notamment d'un jet de produit de revêtement créé par une buse de projection de type goutte à goutte, par exemple de type « continuous ink-jet » ou de type « drop on demand » en langue anglaise, dans lesquels des gouttes de produit de revêtement sont créées séquentiellement une par une.

Par exemple, la tête d'application 6 comporte un boîtier et un circuit d'alimentation 600 logé à l'intérieur du boîtier. Le circuit 600 comporte une entrée d'alimentation 602 destinée à être connectée au conduit d'alimentation 41 et une pluralité de canaux 603 permettant la circulation du produit de revêtement depuis l'entrée 602 vers les buses de pulvérisation 60. Les buses 60 sont ici agencées sur une face inférieure de la tête 6 et débouchent à l'extérieur du boîtier.

Par exemple, les buses de pulvérisation 60 comportent un orifice de sortie et un élément de pulvérisation. Cet élément de pulvérisation est un pistolet pneumatique miniature, ou un bol rotatif, ou une aiguille vibrante mise en vibration, ou un électronébuliseur par exemple du type cône de Taylor.

On note « D », le diamètre l'orifice de sortie de chaque buse de pulvérisation 60 et on note « d » le diamètre d'une gouttelette de produit de revêtement appartenant au jet d'aérosol 61.

Le diamètre D de l'orifice de sortie des buses de pulvérisation 60 est ici supérieur ou égal à 100µm et inférieur ou égal à 600µm.

Le diamètre d des gouttelettes de produit de revêtement est strictement inférieur au diamètre D de l'orifice de sortie des buses de pulvérisation 60. Par exemple, le diamètre d des gouttelettes est supérieur ou égal à 1µm et inférieur ou égal à 80µm, de préférence compris entre 30µm et 50µm.

De préférence, le diamètre d'une gouttelette du jet d'aérosol 61 est ici mesuré lorsque cette gouttelette se déplace dans le jet d'aérosol et ayant une forme sphérique.

Dans cet exemple, les buses 60 sont identiques entre elles et présentent donc toutes un même diamètre D.

La tête 6 est adaptée pour être placée à une distance H de la surface à revêtir. La distance H est inférieure ou égale à 200 mm, de préférence comprise entre 5 mm et 50 mm, de préférence encore comprise entre 10 mm et 30 mm.

Par exemple, l'unité de commande 20 est programmée pour maintenir la tête 6 à la distance H de la surface S lors de son déplacement, par exemple à partir d'un programme de commande prédéfini et/ou en fonction de données de positionnement de la tête 6 fourni par des capteurs de position, non illustrés.

On note « I » le diamètre maximal de la surface de dépôt de chaque jet d'aérosol 61. La buse 60 est ici configurée pour que le jet d'aérosol 61 présente une superficie de dépôt sur la surface S qui soit inférieure ou égale à 10 cm², de préférence inférieure ou égale à 5 cm².

Les buses 60 sont disposées de sorte à ce que les jets d'aérosol 61 respectifs formés par chaque buse 60 soient jointifs, c'est-à-dire attenants deux à deux de manière à former, au niveau de la surface S, un jet d'aérosol composite dépourvu de discontinuité. Les jets d'aérosol 61 sont dits être en contact l'un avec l'autre. Par exemple, les centres géométriques respectifs des buses 60 sont séparés deux à deux par une distance comprise entre 0,1 cm et 2 cm.

De cette manière, la tête 6 permet l'application, sur la surface S, d'une bande B continue et homogène de produit de revêtement.

Dans l'exemple illustré, les jets d'aérosol 61 présentent un recouvrement non nul deux à deux. On note ici I-R la distance de recouvrement entre deux jets d'aérosol 61 voisins, cette distance de recouvrement étant ici mesurée à titre d'exemple entre les bords des jets d'aérosol 61 individuels adjacents, selon une droite parallèle à la surface S et reliant les centres géométriques des surfaces de dépôt respectives des jets d'aérosol 61 correspondant. Le taux de recouvrement est, par exemple, défini comme étant le rapport entre les distances I-R et I. Par exemple, le taux de recouvrement est supérieur ou égal à 5 %. En variante, le taux de recouvrement est sensiblement égal à 50 %, ou sensiblement égal à 66% ou sensiblement égal à 75%. Par « sensiblement égal », on entend ici égal à plus ou moins 10% près.

De façon connue, la couche de peinture déposée individuellement par chacun des jets d'aérosol 61 pour former la bande B présente une section trapézoïdale ayant une largeur égale au diamètre I précédemment décrit. Cette largeur est mesurée à mi-hauteur de cette couche de section trapézoïdale, entre les côtés inclinés opposés de ce trapèze.

Le taux de recouvrement égal à 5% est par exemple obtenu en agençant la tête 6 pour que les couches de section trapézoïdale produites par deux jets d'aérosol 61 se recoupent à mi-hauteur de leurs côtés inclinés. Cela permet d'obtenir une bande B présentant une épaisseur souhaitée avec une seule opération de dépôt, au prix de quelques irrégularités.

Par exemple, le taux de recouvrement de 50% est obtenu en agençant la tête 6 pour que la distance I-R entre deux jets d'aérosol 61 soit égale à la moitié de la largeur I de chacun de ces jets d'aérosol 61.

En variante, toutefois, la distance de recouvrement I-R peut être choisie nulle, le taux de recouvrement étant alors nul.

Les jets d'aérosol 61 formés par les buses 60 forment ainsi ensemble un jet d'aérosol dit composite présentant une largeur L supérieure à la largeur des jets 61 individuels. Le recouvrement est notamment dû à l'agencement et l'espacement des buses 60 sur la tête 6 et au choix de la distance H comme précédemment décrit. La largeur L est ici mesurée selon un plan géométrique perpendiculaire à la direction de déplacement de la tête 6. La largeur L est supérieure ou égale à 20 mm, de préférence supérieure ou égale à 50 mm au niveau de la surface S.

De cette manière, la tête 6 est capable de déposer du produit de revêtement sur une surface plus importante que la surface de dépôt d'un seul jet d'aérosol 61, sans toutefois rencontrer les inconvénients des systèmes connus qui ne comportent qu'une seule buse.

De préférence, comme illustré sur la figure 3, les buses 60 sont alignées sur la face inférieure de la tête 6, le long d'une ou plusieurs lignes et/ou d'une ou plusieurs rangées. Les lignes et les rangées sont de préférence rectilignes. Ici, les rangées sont parallèles à la direction de déplacement de la tête 6, alors que les lignes sont perpendiculaires aux rangées.

Les buses 60 sont ici, à titre illustratif, réparties le long de quatre lignes rectilignes et parallèles entre elle et le long de cinq rangées parallèles entre elles et perpendiculaires aux lignes. Les lignes sont notées « 6L » et les rangées sont notées « 6R ».

La disposition des buses 60 selon plusieurs rangées 6R permet d'obtenir une bande B de largeur L plus importante. La disposition des buses 60 selon plusieurs lignes permet d'augmenter l'épaisseur de la bande B déposée.

En variante, d'autres dispositions spatiales des buses 60 sont possibles. Par exemple, les buses 60 sont disposées en quinconce sur la face inférieure de la tête 6, ou encore suivant des lignes ou des rangées non rectilignes, par exemple présentant des ondulations. De même, le nombre de buses 60 peut être choisi différemment.

Avantageusement, si les buses 60 présentent un encombrement important qui ne permet pas de rapprocher suffisamment les buses 60 d'une même ligne ou d'une même colonne pour obtenir un recouvrement désiré des jets d'aérosol 61, alors ces buses 60 sont agencées en quinconce le long d'une même ligne ou colonne, respectivement.

Grâce à l'invention, en combinant plusieurs buses de pulvérisation 60 créant chacune un jet d'aérosol 61 de produit de revêtement, la tête d'application 6 est ainsi capable de déposer une bande de produit de revêtement sur la surface S avec une précision satisfaisante. En créant plusieurs jets d'aérosol 61 de petite taille à une faible distance de la surface S, on contrôle plus facilement le dépôt des gouttes unitaires sur la surface S, plutôt qu'avec un unique jet d'aérosol généré loin de la surface S et de grande taille, c'est-à-dire ayant une largeur d'impact, au niveau de la surface S, supérieure à 100mm. Les dépôts non désirés, ou « overspray », sont donc diminués et le rendement de l'application est augmenté. Le fait de pouvoir déposer le produit de revêtement sur une surface importante rend la tête d'application 6 utilisable dans des procédés industriels pour lesquels la cadence est élevée et donc le temps dédié à l'application du produit de revêtement ne doit pas être excessif.

Avantageusement, les buses 60 sont chacune commutables, sélectivement et réversiblement, entre un état ouvert et un état fermé. Dans l'état ouvert, la buse 60 autorise la formation du jet d'aérosol 61 lorsqu'elle est alimentée en produit de revêtement, ici par le circuit d'alimentation 600. Dans l'état fermé, la buse 60 empêche la formation du jet d'aérosol 61 même lorsqu'elle est alimentée en produit de revêtement par le circuit d'alimentation 600.

Par exemple, chaque buse 60 comporte en outre, à cet effet, une vanne commandable 601 commutable entre l'état fermé et l'état ouvert. En variante, la vanne 601 appartient au circuit d'alimentation 600.

Chaque vanne 601 est commutable entre l'état ouvert et l'état fermé en fonction d'un signal de commande 63-S délivré par un circuit de commande 63 électronique. Dans cet exemple, le circuit 63 est un inséré à l'intérieur de la tête 6 et est piloté depuis l'unité de commande 20 par l'intermédiaire d'une liaison de données, non illustrée. En variante, le circuit 63 peut être ménagé autrement. Par exemple, le circuit 63 est agencé en dehors de la tête 6, par exemple incorporé au sein de l'unité de commande 20.

Par exemple, ce pilotage est effectué grâce à des instructions exécutables préenregistrées dans le circuit 63 ou dans l'unité de commande 20.

Le circuit 63 est adapté pour piloter indépendamment les vannes 601 des buses 60 de la tête 6. Le circuit 63 peut ainsi, lorsque les buses 60 sont agencées le long de lignes et/ou de rangées, commander conjointement les buses 60 d'une même ligne ou d'une même rangée dans un même état ouvert ou fermé.

De façon encore plus avantageuse, le circuit 63 est programmé pour commander l'ouverture et la fermeture d'au moins une partie des buses 60 de façon cyclique avec une fréquence cyclique prédéfinie. Cette fréquence prédéfinie est en outre calculée en fonction de paramètres du déplacement de la tête 6 par rapport à la surface S.

En particulier, lorsque la tête 6 se déplace par rapport à la surface S en décrivant une trajectoire courbe au-dessus de la surface S, alors l'extrémité proximale de la tête 6, c'est-à-dire celle qui se situe la plus proche du centre de courbure de la trajectoire, se déplace avec une vitesse plus réduite que l'extrémité distale de la tête 6, qui se situe à l'opposé, le plus loin du centre de courbure. Dans un tel cas, la quantité de produit de revêtement projetée par la tête 6 doit être modulée afin de garantir une bonne homogénéité du dépôt de produit de revêtement sur toute la largeur L de la bande B. En particulier, la tête 6 doit être pilotée pour déposer moins de produits de revêtement sur son extrémité proximale que sur son extrémité distale, notamment pour éviter que l'épaisseur de la bande B ne soit plus élevée du côté de l'extrémité proximale que du côté de l'extrémité distale.

Ainsi, les buses 60 situées sur l'extrémité proximale de la tête 6 sont ouvertes puis fermées en succession à la fréquence cyclique de manière à déposer moins de produit de revêtement que les buses 60 situées au niveau de l'extrémité distale, ces dernières restant ici ouvertes. La fréquence cyclique est alors fonction du rayon de courbure de la trajectoire.

Par exemple, les paramètres de déplacement sont fournis au circuit 63 par l'unité de commande 20, en fonction d'un programme de consigne de déplacement de la tête 6 et/ou en fonction de données mesurées par les capteurs de déplacement. Par exemple, les paramètres de déplacement comportent la vitesse de déplacement de chaque buse 60 par rapport à la surface S.

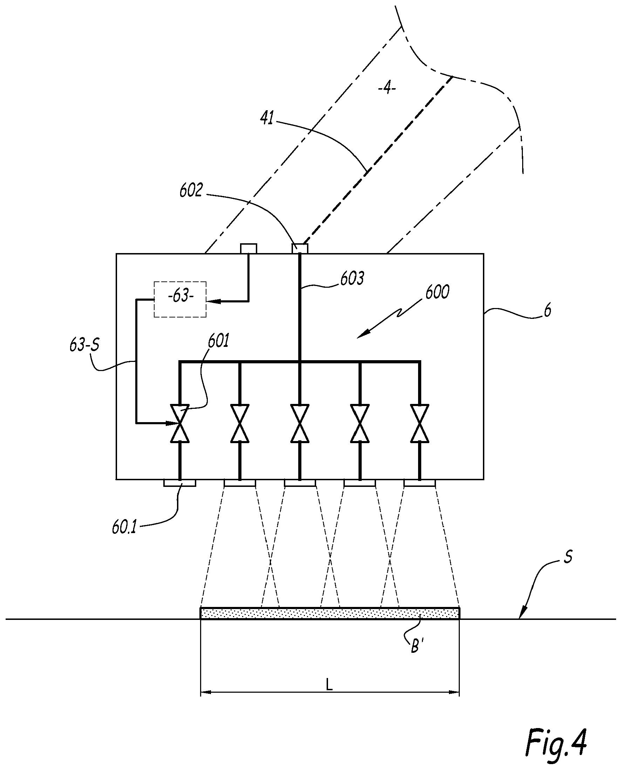

A la figure 4, l'une des buses de pulvérisation 60, portant ici la référence 60.1, est illustrée dans son état fermé. Ainsi, cette buse 60.1 ne crée aucun jet d'aérosol 61. On note L' la largeur du jet d'aérosol composite formée par la tête 6 dans ce cas. La largeur L' est strictement inférieure à la largeur L. De fait, la tête 6 dépose une bande de produit B' plus étroite que la bande B.

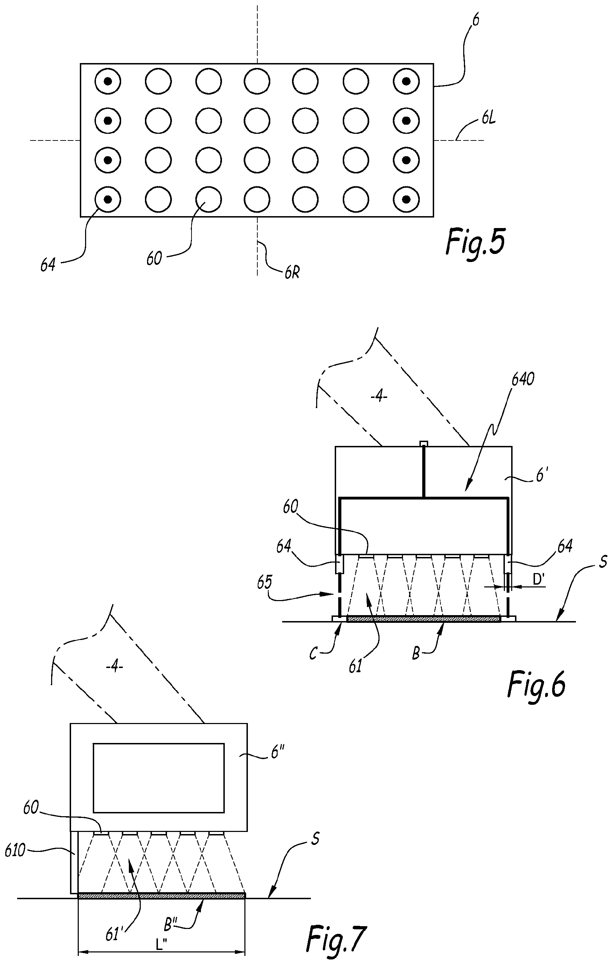

Les figures 5 et 6 représentent un mode de réalisation de la tête d'application 6. Les éléments de la tête d'application de ce mode de réalisation qui sont analogues à la variante des figures 1 à 4 portent les mêmes références et ne sont pas décrits en détail, dans la mesure où la description ci-dessus peut leur être transposée.

La tête d'application 6' diffère notamment de la tête 6 en ce qu'elle comporte en outre une ou plusieurs buses de projection secondaires 64, aussi nommées buses de projection additionnelles. Les buses 64 sont distinctes des buses 60.

Les buses additionnelles 64 sont chacune configurées pour générer un jet 65 unitaire de produit de revêtement de type goutte à goutte. Ainsi, les buses 64 ne permettent pas la formation d'un jet d'aérosol analogue au jet d'aérosol 61. Par exemple, les buses 64 comportent chacune un orifice de sortie, de diamètre noté D', et un système d'éjection de goutte à goutte avec un élément piézoélectrique ou une vanne obstruante.

Le diamètre D' est, de préférence, strictement inférieur au diamètre D des buses 60, de manière à ce que les gouttelettes de produit de revêtement du jet 65 soient de diamètre le plus petit possible, tout en permettant l'écoulement du produit de revêtement pouvant contenir des particules solides. Les gouttes crées par goutte à goutte ont un diamètre d' supérieur au diamètre d des gouttes du jet d'aérosol 61, ces dernières étant petites que le diamètre D de la buse 60. Par exemple, le diamètre d'est sensiblement égal au diamètre D'. Par exemple, le diamètre D' est inférieur ou égal à 0,8D.

Le jet 65 conduit au dépôt d'une bande C de produit de revêtement sur la surface S. La bande C présente une largeur inférieure à la largeur L de la bande B. La bande C est attenante à la bande B sans présenter de discontinuité avec la bande B.

A cet effet, les buses 64 sont disposées sur au moins un bord de la tête d'application 6', de façon adjacente aux buses 60, de manière à ce que la bande C soit attenante à la bande B.

Dans cet exemple, les buses 64 sont disposées sur des rangées situées sur des bords d'extrémités opposés de la face inférieure de la tête 6, de part et d'autre une zone centrale de cette face inférieure sur laquelle sont disposées les buses 60. Ainsi, les buses 64 entourent les buses 60. En variante, les buses 64 pourraient être disposées autrement, par exemple sur des lignes d'extrémité de la tête 6. Les buses 64 peuvent aussi n'être disposées que sur un seul bord de la tête 6.

Dans cet exemple, les buses de projection additionnelles 64 sont alimentées par un circuit d'alimentation 640 distinct du système d'alimentation 600. De cette manière, les buses 64 sont adaptées pour projeter un produit de revêtement additionnel distinct du produit de revêtement pulvérisé par les buses de pulvérisation 60.

Une telle configuration est particulièrement avantageuse dans le cas où le produit de revêtement est un liquide dans lequel des particules solides sont en suspension. C'est par exemple le cas des peintures métallisées, qui comportent des particules ou paillettes métalliques en suspension dans de la peinture liquide. C'est également le cas des peintures chargées en mica, en verre ou autres particules destinées à donner un aspect visuel à effet ou à améliorer certaines propriétés mécaniques ou physiques de la couche de produit de revêtement, par exemple pour la rendre plus résistante aux rayures.

Lorsque les buses de projection 64 présentent un diamètre D' plus petit que le diamètre D des buses de pulvérisation 60, les buses 64 ne sont préférablement pas directement alimentées par la peinture métallisée, car il existe un risque que les paillettes métalliques ne viennent obstruer les buses 64. Dans ce cas, avantageusement, de la peinture correspondante dépourvue de paillettes métalliques est fournie au circuit d'alimentation 640, alors que de la peinture métallisée comprenant les paillettes est fournie au circuit d'alimentation 600. On peut également utiliser une peinture de teinte légèrement différente de la teinte obtenue avec une peinture strictement identique mais sans paillettes afin d'obtenir une teinte identique une fois appliquée.

En variante, toutefois, le même produit de revêtement est fourni aux buses 60 et aux buses 64. Cela est particulièrement intéressant pour de la peinture sans particules à effet métallisé. Le circuit d'alimentation 640 pourrait, dans ce cas, être alimenté conjointement au circuit d'alimentation 600, par exemple par le conduit d'alimentation 41. Cependant deux circuits d'alimentation distincts sont préférables pour palier aux conditions de fonctionnement différentes (débit produit, pression produit) nécessaires aux buses 60 et aux buses 64 pour travailler simultanément.

Les buses 64 permettent ainsi d'améliorer la qualité du dépôt de produit sur la surface S, notamment de manière à présenter des bords latéraux plus nets. En variante, les buses 64 peuvent être différentes de par leur géométrie, leur positionnement ou leur orientation angulaire.

La figure 7 représente un autre mode de réalisation de l'invention. Les éléments de la tête d'application 6" de ce mode de réalisation qui sont analogues à la variante des figures 1 à 4 portent les mêmes références et ne sont pas décrits en détail, dans la mesure où la description ci-dessus peut leur être transposée.

La tête 6" diffère de la tête 6 en ce qu'elle comporte en outre un masque 610 amovible ou rétractable situé sur un bord de la tête 6", de manière à écrêter au moins partiellement l'un des jets d'aérosol, ici noté 61', émis par une des buses 60. Le masque 610 est ici rétractable par un déplacement en translation parallèlement à la direction de propagation du jet d'aérosol. Ce déplacement est par exemple assuré au moyen d'un moteur, non illustré, commandé par l'unité de commande 20.

De cette manière, la bande de peinture B' déposée présente une bordure plus nette et mieux délimitée que dans le cas où aucun masquage n'est réalisé.

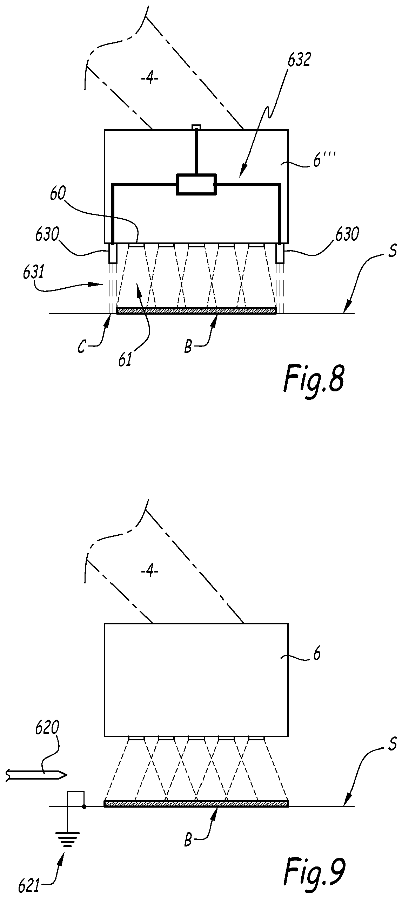

Avantageusement, le masque 610 est réalisé en matière électriquement conductrice et est adapté pour être connecté à un circuit de polarisation électrique, pour polariser électriquement ce masque 610. Cela permet d'exercer un champ électrique de guidage sur les gouttelettes des jets d'aérosol émis par les buses 60, le produit de revêtement étant préalablement polarisé électriquement avec une polarité opposée. Ainsi, le champ électrique de guidage permet d'augmenter la netteté du bord de la bande de peinture B", de façon analogue à ce qui est expliqué dans ce qui suit en référence au mode de réalisation de la figure 9.

En variante, un exemplaire du masque 610 peut être placé sur chacun des bords latéraux de la tête 6".

La figure 8 représente un autre mode de réalisation de l'invention. Les éléments de la tête d'application 6'" de ce mode de réalisation qui sont analogues à la variante des figures 1 à 4 portent les mêmes références et ne sont pas décrits en détail, dans la mesure où la description ci-dessus peut leur être transposée.

La tête d'application 6'" comporte ici en outre un dispositif d'application d'un flux d'air de guidage du produit de revêtement pulvérisé. Ce dispositif comporte notamment des orifices d'éjection d'air 630 reliés à un circuit d'alimentation 632 en air comprimé, par exemple alimenté au moyen d'un conduit dédié à cet effet par le système 1. Les orifices 630 sont adaptés pour projeter un flux 631 d'air de guidage adjacent à au moins une partie des jets d'aérosol 61 en sortie des buses de pulvérisation 60 et orienté selon la direction de propagation. Ce flux d'air de guidage constitue ainsi une barrière que les gouttelettes de produit de revêtement ne peuvent pas franchir. Ainsi, on limite le dépôt des gouttelettes en dehors d'une zone cible de la surface S. La bande B de produit ainsi déposé présente également des bords plus nets. Les orifices 630 sont ici placés sur des bords latéraux de la face inférieure de la tête 6"'.

Selon une autre variante, non illustrée, les orifices 630 peuvent être placés différemment, par exemple placés au niveau de chaque buse 60 pour former plusieurs flux indépendants. Les flux d'air 631 peuvent être orientés de façon convergente ou divergente par rapport à la direction de propagation du jet d'aérosol 61.

Un tel dispositif peut avantageusement être utilisé avec les têtes d'application 6, 6' ou 6".

La figure 9 représente un autre mode de réalisation de l'invention. Les éléments du système d'application de ce mode de réalisation qui sont analogues à la variante des figures 1 à 4 portent les mêmes références et ne sont pas décrits en détail, dans la mesure où la description ci-dessus peut leur être transposée.

Ce système diffère notamment du système 1 en ce qu'il comporte en outre une électrode 620 adaptée pour appliquer un champ électrique sur les jets d'aérosol 61 émis par les buses de pulvérisation 60. Ainsi, les gouttelettes des jets d'aérosol 61 sont chargées électriquement avec une charge électrique non nulle. En parallèle, la surface S est raccordée électriquement à une masse électrique 621. De cette manière, au moins une partie des gouttelettes est attirée, sous l'action d'une force électrostatique, vers la surface S à revêtir. Grâce à cela, on limite le dépôt des gouttelettes en dehors d'une zone cible de la surface S. La bande B de produit ainsi déposé présente également des bords plus nets.

A titre d'exemple illustratif, un champ électrique E est généré dans l'axe de pulvérisation entre l'électrode 620 et la surface S à recouvrir. Ce champ électrique E accélère les gouttelettes chargées pendant leur trajet vers la surface S. Une force électrique d'intensité F=qE, où q est la charge électrique élémentaire, se superpose à la force de pesanteur terrestre et aux forces de frottement de l'air. La force électrique est tangente aux lignes de champs qui convergent vers la surface S. Certaines gouttelettes aux trajectoires rectilignes qui auraient, en l'absence de champ électrique, abouti en dehors d'une zone cible de la surface S, sont déviées vers celle-ci et sont attirées par la cible.

De plus, grâce au champ E, les gouttelettes sont accélérées, ce qui permet d'augmenter la distance entre la buse 60 et la surface S pour atteindre les zones difficiles d'accès. Cela accroit et uniformise le rendement de dépôt.

Un autre avantage est l'affinement des dimensions des gouttelettes pulvérisées par les buses 60, qui améliore l'aspect final du revêtement une fois déposé sur la surface S. Un des paramètres limitant la technologie goutte à goutte est la taille de l'orifice de sortie de la buse qui est faible et incompatible avec les caractéristiques de nombreux produits de revêtements autres que des encres, comme c'est le cas des peintures automobiles. Le champ électrique E axial entre buse 60 et surface S, appliqué au niveau des gouttelettes, contribue à les atomiser encore plus finement. La combinaison de l'énergie d'atomisation et du champ électrique augmente la force d'extraction de la goutte de la surface du film de peinture. La haute tension permet à finesse d'atomisation équivalente d'utiliser des orifices de buses 60 de diamètres plus élevés. Enfin, le pouvoir d'atomisation accru, permet d'augmenter les cadences de production lorsque la tête 6 est utilisée dans un contexte de production industrielle, telle qu'une ligne de peinture automobile.

L'utilisation d'un guidage électrostatique améliore aussi l'uniformisation et d'homogénéisation du positionnement des gouttelettes, qui se repoussent les unes les autres. Elles se déposent de manière plus diffuse, contrairement aux technologies goutte à goutte. Cela atténue les artefacts visuels indésirables tels que les phénomènes de marbrage et de lignage.

Selon une variante non illustrée, la tête d'application 6 comporte un dispositif pour polariser électriquement le produit de revêtement avant qu'il ne soit pulvérisé par les buses 60. En parallèle, la surface S est raccordée électriquement à une masse électrique 621. De cette manière, les gouttelettes des jets d'aérosol 61 sont polarisées électriquement sans avoir besoin d'utiliser une électrode 620.

Grace à cette polarisation électrique, au moins une partie des gouttelettes est attirée, sous l'action d'une force électrostatique, vers la surface S à revêtir, ce qui permet de limiter le dépôt des gouttelettes en dehors d'une zone cible de la surface S. La bande B de produit ainsi déposé présente également des bords plus nets.

Les modes de réalisation et les variantes envisagés ci-dessus peuvent être combinés entre eux pour générer de nouveaux modes de réalisation tant que ceux-ci sont couverts par l'étendue de la protection définie par les revendications suivantes.

## Revendications

1. Tête d'application (6', 6", 6"') d'un produit de revêtement sur une surface (S) à revêtir, cette tête d'application comportant au moins deux buses de pulvérisation (60) du produit de revêtement, chacune adaptée pour projeter le produit de revêtement sous la forme d'un jet d'aérosol (61), en créant simultanément plusieurs gouttelettes dont le diamètre est inférieur au diamètre (D) de l'orifice de sortie de la buse de pulvérisation (60), la tête d'application (6', 6", 6"') étant **caractérisée en ce qu'**elle comporte une ou plusieurs buses de projection additionnelles (64), distinctes des buses de pulvérisation (60), les buses de projection additionnelles (64) étant adaptées pour générer un jet (65) goutte à goutte de produit de revêtement.

2. Tête d'application selon la revendication 1, **caractérisée en ce que** les centres des buses de pulvérisation (60) sont espacées deux à deux d'une distance comprise entre 0,1cm et 2cm, de manière à ce que les jets d'aérosol (61) soient en contact l'un avec l'autre au niveau de la surface (S) à revêtir.

3. Tête d'application selon la revendication 1, **caractérisée en ce que** les buses de pulvérisation (60) sont agencées de manière à obtenir un recouvrement entre les jets d'aérosol (61) produits par ces buses au niveau de la surface (S) à revêtir, de préférence avec un taux de recouvrement entre les jets d'aérosol produits par deux buses de pulvérisation immédiatement voisines l'une de l'autre est supérieur ou égal à 5 %, ou sensiblement égal à 50 %, ou sensiblement égal à 66%.

4. Tête d'application selon l'une des revendications précédentes, **caractérisée en ce que** le diamètre (D) de l'orifice de sortie de chaque buse de pulvérisation (60) est supérieur ou égal à 100µm.

5. Tête d'application (6', 6", 6"') selon l'une des revendications précédentes, ces buses de projection additionnelles (64) étant disposées sur au moins un bord latéral de la tête d'application et/ou de façon adjacente à des buses de pulvérisation (60).

6. Tête d'application (6', 6", 6"') selon l'une des revendications précédentes, **caractérisée en ce que** les buses de projection additionnelles (64) présentent un diamètre (D') d'orifice de sortie inférieur au diamètre (D) de l'orifice de sortie des buses de pulvérisation (60).

7. Tête d'application (6', 6", 6"') selon l'une des revendications précédentes, **caractérisée en ce que** les buses de projection additionnelles (64) sont alimentées par un circuit d'alimentation secondaire (640) distinct du circuit d'alimentation (600) des buses de pulvérisation (60).

8. -Tête d'application selon l'une des revendications précédentes, **caractérisée en ce que** les buses de pulvérisation (60) sont alignées entre elles le long de lignes (6L) et/ou de rangées (6R).

9. -Tête d'application (6"') selon l'une des revendications précédentes, **caractérisée en ce qu'**elle comporte un dispositif d'application d'un flux d'air de guidage du produit de revêtement pulvérisé, comprenant des orifices d'éjection d'air (630) adaptés pour projeter un flux (631) d'air de guidage adjacent à au moins une partie des jets d'aérosol (61).

10. -Tête d'application (6") selon l'une des revendications précédentes, **caractérisé en ce que** la tête d'application (6") comporte un masque (610) amovible ou rétractable, pour écrêter latéralement le jet d'aérosol émis par au moins une partie des buses de pulvérisation (60).

11. Tête d'application (6', 6", 6"') selon l'une des revendications précédentes, **caractérisé en ce qu'**elle comporte au moins une électrode (620) adaptée pour appliquer un champ électrique sur les jets d'aérosol (61) émis par les buses de pulvérisation (60), la surface à revêtir étant raccordée à une masse électrique (621) du système.

12. Tête d'application selon la revendication 10, **caractérisée en ce que** le masque (610) est réalisé en matière électriquement conductrice et est adapté pour être connecté à un circuit de polarisation électrique pour polariser électriquement ce masque, le produit de revêtement étant préalablement polarisé électriquement avec une polarité opposée.

13. -Système d'application (1) d'un produit de revêtement sur une surface (S) à revêtir, comprenant un robot industriel multiaxes (2) pourvu d'un bras articulé (4) et une tête d'application (6) du produit de revêtement fixée sur le bras articulé (4), **caractérisé en ce que** la tête d'application (6', 6", 6"') est selon l'une des revendications précédentes.

14. Système d'application selon la revendication 13, **caractérisé en ce que** le système (1) est adapté pour que la distance (H) entre la tête d'application (6) et la surface (S) à revêtir soit inférieure à 200mm, de préférence comprise entre 5mm et 50mm, de préférence encore comprise entre 10mm et 30mm.

15. Système selon la revendication 13 ou 14, **caractérisé en ce que** la tête d'application (6', 6", 6"') est fixée au bras articulé (4) de façon amovible au moyen d'un dispositif de fixation magnétique (40).

## Patentansprüche

1. Kopf (6', 6", 6"') zum Auftragen eines Beschichtungsprodukts auf eine zu beschichtende Oberfläche (S), wobei dieser Auftragskopf wenigstens zwei Düsen zum Zerstäuben (60) des Beschichtungsprodukts aufweist, die jeweils dafür eingerichtet sind, das Beschichtungsprodukt in Form eines Aerosolstrahls (61) auszustoßen, indem gleichzeitig mehrere Tröpfchen gebildet werden, deren Durchmesser kleiner ist als der Durchmesser (D) der Austrittöffnung der Zerstäubungsdüse (60), wobei der Auftragskopf (6', 6", 6"') **dadurch gekennzeichnet ist, dass** er eine oder mehrere zusätzliche Ausstoßdüsen (64) aufweist, die sich von den Zerstäubungsdüsen (60) unterscheiden, wobei die zusätzlichen Ausstoßdüsen (64) dafür eingerichtet sind, einen tropfenweisen Strahl (65) des Beschichtungsprodukts zu erzeugen.

2. Auftragskopf nach Anspruch 1, **dadurch gekennzeichnet, dass** die Mitten von jeweils zwei Zerstäubungsdüsen (60) mit einem Abstand zwischen 0,1 cm und 2 cm voneinander beabstandet sind, sodass die Aerosolstrahlen (61) auf der Höhe der zu beschichtenden Oberfläche (S) miteinander in Kontakt sind.

3. Auftragskopf nach Anspruch 1, **dadurch gekennzeichnet, dass** die Zerstäubungsdüsen (60) derart ausgebildet sind, dass auf der Höhe der zu beschichtenden Oberfläche (S) eine Überlappung zwischen den durch diese Düsen erzeugten Aerosolstrahlen (61) erzielt wird, wobei ein Überlappungsgrad zwischen den Aerosolstrahlen, die durch zwei unmittelbar zueinander benachbarte Zerstäubungsdüsen erzeugt werden, größer oder gleich 5 % oder im Wesentlichen gleich 50 % oder im Wesentlichen gleich 66 % beträgt.

4. Auftragskopf nach einem der vorhergehenden Ansprüche, **dadurch gekennzeichnet, dass** der Durchmesser (D) der Austrittöffnung jeder Zerstäubungsdüse (60) größer als oder gleich 100 µm ist.

5. Auftragskopf (6', 6", 6"') nach einem der vorhergehenden Ansprüche, wobei die zusätzlichen Ausstoßdüsen (64) an wenigstens einem Seitenrand des Auftragskopfs und/oder auf eine zu den Zerstäubungsdüsen (60) benachbarte Weise angeordnet sind.

6. Auftragskopf (6', 6", 6"') nach einem der vorhergehenden Ansprüche, **dadurch gekennzeichnet, dass** die zusätzlichen Ausstoßdüsen (64) einen Austrittöffnungsdurchmesser (D') aufweisen, der kleiner ist als der Durchmesser (D) der Austrittöffnung der Zerstäubungsdüsen (60).

7. Auftragskopf (6', 6", 6"') nach einem der vorhergehenden Ansprüche, **dadurch gekennzeichnet, dass** die zusätzlichen Ausstoßdüsen (64) durch einen Sekundärspeisekreis (640) gespeist werden, der sich von dem Speisekreis (600) der Zerstäubungsdüsen (60) unterscheidet.

8. Auftragskopf nach einem der vorhergehenden Ansprüche, **dadurch gekennzeichnet, dass** die Zerstäubungsdüsen (60) entlang von Zeilen (6L) und/oder Reihen (6R) zueinander ausgerichtet sind.

9. Auftragskopf (6"') nach einem der vorhergehenden Ansprüche, **dadurch gekennzeichnet, dass** er eine Vorrichtung zum Auftragen eines Luftstroms zur Führung des zerstäubten Beschichtungsprodukts aufweist, die Luftausstoßöffnungen (630) umfasst, die dafür eingerichtet sind, einen Führungsluftstrom (631) benachbart zu wenigstens einem Teil der Aerosolstrahlen (61) auszustoßen.

10. Auftragskopf (6") nach einem der vorhergehenden Ansprüche, **dadurch gekennzeichnet, dass** der Auftragskopf (6") eine abnehmbare oder abziehbare Maske (610) aufweist, um den durch wenigstens einen Teil der Zerstäubungsdüsen (60) ausgestoßenen Aerosolstrahl seitlich abzuschneiden.

11. Auftragskopf (6', 6", 6"') nach einem der vorhergehenden Ansprüche, **dadurch gekennzeichnet, dass** er wenigstens eine Elektrode (620) aufweist, die dafür eingerichtet ist, ein elektrisches Feld an die durch die Zerstäubungsdüsen (60) ausgestoßenen Aerosolstrahlen (61) anzulegen, wobei die zu beschichtende Oberfläche an eine elektrische Masse (621) des Systems angeschlossen ist.

12. Auftragskopf nach Anspruch 10, **dadurch gekennzeichnet, dass** die Maske (610) aus einem elektrisch leitenden Material hergestellt ist und dafür eingerichtet ist, mit einer Schaltung zur elektrischen Polarisation verbunden zu werden, um diese Maske elektrisch zu polarisieren, wobei das Beschichtungsprodukt vorab mit einer entgegengesetzten Polarität elektrisch polarisiert wird.

13. System (1) zum Auftragen eines Beschichtungsprodukts auf eine zu beschichtende Oberfläche (S), umfassend einen mehrachsigen Industrieroboter (2), der mit einem Gelenkarm (4) und einem an dem Gelenkarm (4) befestigten Kopf (6) zum Auftragen des Beschichtungsprodukts versehen ist, **dadurch gekennzeichnet, dass** der Auftragskopf (6', 6", 6"') ein Kopf nach einem der vorhergehenden Ansprüche ist.

14. Auftragssystem nach Anspruch 13, **dadurch gekennzeichnet, dass** das System (1) dafür eingerichtet ist, dass die Entfernung (H) zwischen dem Auftragskopf (6) und der zu beschichtenden Oberfläche (S) kleiner als 200 mm ist und vorzugsweise zwischen 5 mm und 50 mm, stärker bevorzugt zwischen 10 mm und 30 mm beträgt.

15. System nach Anspruch 13 oder 14, **dadurch gekennzeichnet, dass** der Auftragskopf (6',6",6"') mithilfe einer magnetischen Befestigungsvorrichtung (40) auf abnehmbare Weise an dem Gelenkarm (4) befestigt ist.

## Claims

1. Application head (6', 6", 6"') for applying a coating product to a surface (S) to be coated, the application head comprising at least two spray nozzles (60) for spraying the coating product, each adapted to project the coating product in the form of a jet of aerosol (61) by simultaneously creating multiple droplets whose diameter is smaller than the diameter (D) of the outlet orifice of the spray nozzle (60), the application head (6', 6", 6"') being **characterised in that** it comprises one or more additional jetting nozzles (64), separate from the spray nozzles (60), the additional jetting nozzles (64) being adapted to generate a jet (65) drop by drop of coating product.

2. Application head according to claim 1, **characterised in that** the centres of the spray nozzles (60) are spaced apart in pairs by a distance of between 0.1 cm and 2 cm so that the jets of aerosol (61) are in contact with one another at the surface (S) to be coated.

3. Application head according to claim 1, **characterised in that** the spray nozzles (60) are arranged so as to obtain an overlap between the jets of aerosol (61) produced by those nozzles at the surface (S) to be coated, preferably with a degree of overlap between the jets of aerosol produced by two immediately adjacent spray nozzles greater than or equal to 5%, or substantially equal to 50%, or substantially equal to 66%.

4. Application head according to any one of the preceding claims, **characterised in that** the diameter (D) of the outlet orifice of each spray nozzle (60) is greater than or equal to 100 µm.

5. Application head (6', 6", 6"') according to any one of the preceding claims, the additional jetting nozzles (64) being arranged on at least one lateral edge of the application head and/or adjacent to spray nozzles (60).

6. Application head (6', 6", 6"') according to any one of the preceding claims, **characterised in that** the additional jetting nozzles (64) have an outlet orifice diameter (D') which is smaller than the diameter (D) of the outlet orifice of the spray nozzles (60).

7. Application head (6', 6", 6"') according to any one of the preceding claims, **characterised in that** the additional jetting nozzles (64) are supplied by a secondary supply circuit (640) which is separate from the supply circuit (600) for the spray nozzles (60).

8. Application head according to any one of the preceding claims, **characterised in that** the spray nozzles (60) are aligned with one another along lines (6L) and/or rows (6R).

9. Application head (6"') according to any one of the preceding claims, **characterised in that** it comprises a device for applying a stream of air for guiding the sprayed coating product, comprising air ejection orifices (630) adapted to project a stream (631) of guiding air adjacent to at least some of the jets of aerosol (61).

10. Application head (6") according to any one of the preceding claims, **characterised in that** the application head (6") comprises a removable or retractable mask (610) for laterally clipping the jet of aerosol emitted by at least some of the spray nozzles (60).

11. Application head (6', 6", 6"') according to any one of the preceding claims, **characterised in that** it comprises at least one electrode (620) adapted to apply an electric field to the jets of aerosol (61) emitted by the spray nozzles (60), the surface to be coated being connected to an electrical ground (621) of the system.

12. Application head according to claim 10, **characterised in that** the mask (10) is made of electrically conductive material and is adapted to be connected to an electric polarisation circuit for electrically polarising the mask, the coating product being electrically polarised beforehand with an opposite polarity.

13. Application system (1) for applying a coating product to a surface (S) to be coated, comprising a multi-axis industrial robot (2) provided with an articulated arm (4) and an application head (6) for applying the coating product which is fixed to the articulated arm (4), **characterised in that** the application head (6', 6", 6"') is in accordance with any one of the preceding claims.

14. Application system according to claim 13, **characterised in that** the system (1) is adapted so that the distance (H) between the application head (6) and the surface (S) to be coated is less than 200 mm, preferably between 5 mm and 50 mm, more preferably between 10 mm and 30 mm.

15. System according to claim 13 or 14, **characterised in that** the application head (6', 6", 6"') is fixed to the articulated arm (4) in a removable manner by means of a magnetic fixing device (40).
